# FASCICULE DE BREVET EUROPEEN

(11) **EP 3 325 788 B1**
(45) Date de publication et mention de la délivrance du brevet: **28.08.2019**
(21) Numéro de dépôt: 16745807.4
(22) Date de dépôt: 20.07.2016
(51) Int. Cl.: F02C 9/18, F01D 9/06, F01D 25/30, F02C 3/13

(54) **CARTER D'ÉCHAPPEMENT D'UNE TURBOMACHINE A DURÉE DE VIE AUGMENTÉE**
ABGASGEHÄUSE EINER TURBOMASCHINE MIT ERHÖHTER LEBENSDAUER
AIRCRAFT GAS TURBINE ENGINE EXHAUST CASING WITH INCREASED LIFESPAN

(30) Priorité: 21.07.2015 FR 1556893
(43) Date de publication de la demande: 30.05.2018
(73) Titulaire: Safran Aircraft Engines, 75015 Paris (FR)
(72) Inventeur: JOUY, Baptiste, Marie, Aubin, Pierre, 77550 Moissy-Cramayel Cedex (FR); PELLATON, Bertrand, Guillaume, Robin, 77550 Moissy-Cramayel Cedex (FR); PRESTEL, Sébastien, Jean, Laurent, 77550 Moissy-Cramayel Cedex (FR)
(74) Mandataire: Regimbeau
(86) Numéro de dépôt international: PCT/FR2016/051870
(87) Numéro de publication internationale: WO 2017/013356

(56) Documents cités:
- FR-A1- 2 103 560
- US-A- 5 134 844
- US-A- 5 316 437
- US-A1- 2014 119 880

## Description

La présente invention concerne un carter d'échappement de turbomachine pour un aéronef dont la durée de vie est augmentée.

Plus précisément, elle concerne un carter d'échappement permettant de limiter les efforts créés par les différences de température entre une virole et un moyeu dudit carter d'échappement.

### DOMAINE TECHNIQUE GÉNÉRAL ET ETAT DE LA TECHNIQUE

La durée de vie d'un carter d'échappement (ou Turbine Rear Frame, TRF, selon la terminologie anglo-saxonne) est très impactée par les efforts créés par des différences de température entre une virole et un moyeu dudit carter d'échappement. Plus particulièrement, ces efforts sont créés au niveau des bras qui relient la virole externe au moyeu interne.

Ainsi, lors du décollage de l'aéronef ou des phases d'accélération, la virole se réchauffe plus vite que le moyeu qui est plus massif, et cette différence de température entre ces deux pièces crée des efforts en traction au niveau des bras qui relient la virole au moyeu, car sous l'effet de la chaleur, la virole se dilate plus vite que le moyeu.

A l'inverse, à l'arrêt de la turbomachine, la virole se refroidit plus vite que le moyeu, créant ainsi des efforts de compression au niveau desdits bras qui relient la virole au moyeu.

Un carter d'échappement selon l'art antérieur est connu de FR2103560 A1.

### PRÉSENTATION GÉNÉRALE DE L'INVENTION

Un but général de l'invention est de proposer une solution permettant de limiter les efforts créés par les différences de température entre la virole et le moyeu, de manière à augmenter la durée de vie des bras reliant la virole au moyeu, et ainsi celle du carter d'échappement tout entier. De plus, cette solution doit être simple de manière à pouvoir être facilement implémentée sur une turbomachine d'un aéronef, sans entraîner un surcoût important.

Plus particulièrement, selon un premier aspect, l'invention propose un carter d'échappement pour une turbomachine d'un aéronef selon la revendication 1, le carter d'échappement comprenant une virole, un moyeu formant une cavité, des bras creux reliant ladite virole audit moyeu, et au moins une bouche située sur la virole et qui est adaptée pour être connectée à un tube de sortie d'une vanne de régime transitoire de la turbomachine, caractérisé en ce que ladite au moins une bouche est fixée sur la virole dans le prolongement d'un bras creux, de manière qu'un flux d'air sortant du tube de sortie de la vanne de régime transitoire pénètre dans le bras creux et circule dans la cavité du moyeu.

Un tel dispositif permet de limiter la différence de température entre le moyeu et la virole lors du décollage ou des phases d'accélération de l'aéronef en réchauffant ledit moyeu, et permet ainsi d'augmenter la durée de vie du carter d'échappement.

Le carter d'échappement comprend au moins un bras de chape, et un bras creux adjacent audit bras de chape comprend un déflecteur de manière à dévier le flux d'air sortant dudit bras creux vers un raidisseur du bras de chape.

Selon une caractéristique supplémentaire, le bras creux adjacent au bras de chape comprend un raidisseur qui comprend un orifice latéral, et le déflecteur est situé à l'intérieur du raidisseur dudit bras creux, de manière à dévier au moins une partie du flux d'air sortant dudit bras creux vers le raidisseur du bras de chape à travers ledit orifice latéral.

Selon une caractéristique particulière, le bras creux qui est adjacent au bras de chape comprend un raidisseur qui comprend un orifice frontal, et le déflecteur est situé au niveau dudit orifice frontal.

Selon une autre caractéristique, le déflecteur est une tôle incurvée.

Selon une caractéristique additionnelle, le carter d'échappement est un carter d'échappement à bras tangentiels.

Selon un deuxième aspect, l'invention propose une turbomachine comprenant un carter d'échappement selon l'une des caractéristiques précitées, dans laquelle ladite turbomachine comprend une vanne d'échappement transitoire comprenant un tube de sortie qui est connecté à une bouche dudit carter d'échappement.

Selon un troisième aspect, l'invention propose un aéronef comprenant une turbomachine selon la caractéristique précitée.

### DESCRIPTIF DES FIGURES

D'autres caractéristiques, buts et avantages de la présente invention apparaitront à la lecture de la description détaillée qui va suivre, et en regard des dessins annexés, donnés à titre d'exemples non limitatifs et sur lesquels :

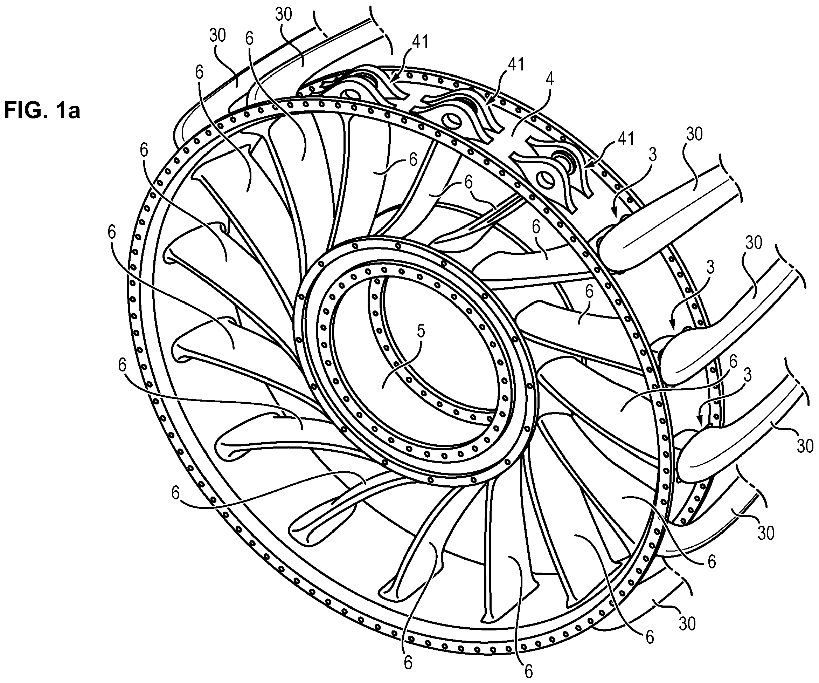

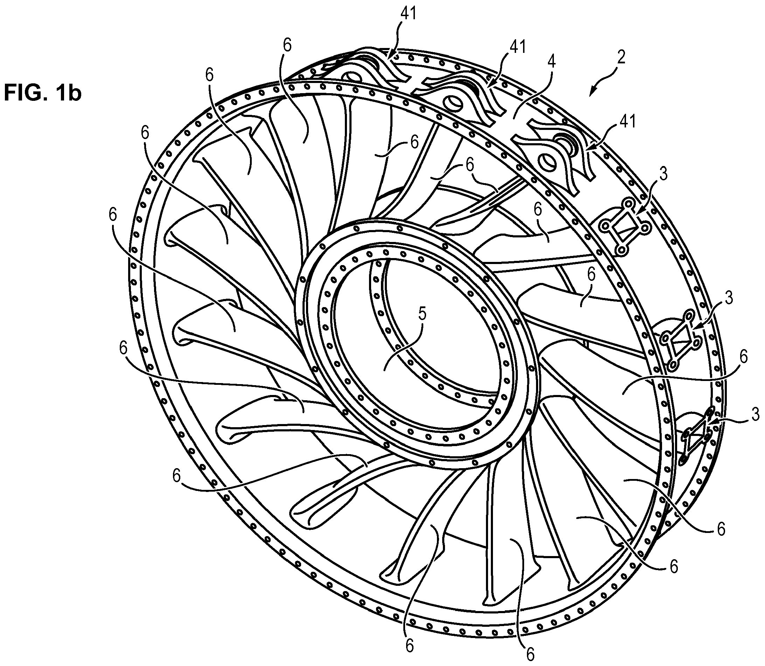

- la figure 1.a représente une vue en perspective d'un carter d'échappement selon un premier mode de réalisation ;
- la figure 1.b représente la même vue que la figure 1.a, mais les tubes de sortie de la vanne d'échappement transitoire ne sont pas représentés de sorte que les bouches soient plus visibles ;
- la figure 2 représente une vue d'une coupe du carter d'échappement selon le premier mode de réalisation ;
- la figure 3 représente une vue détaillée des renforts des bras reliant la virole au moyeu selon une variante du premier mode de réalisation, dans laquelle le raidisseur du bras ne comprend qu'un orifice frontal ;
- la figure 4 représente une vue détaillée des renforts des bras reliant la virole au moyeu selon une autre variante du premier mode de réalisation, dans laquelle le raidisseur du bras comprend un orifice latéral ;
- la figure 5 représente une vue encore plus détaillée que la figure 4 de la variante du premier mode de réalisation dans laquelle le raidisseur comprend un orifice latéral ;
- la figure 6 représente une vue d'une coupe d'un carter d'échappement selon un deuxième mode de réalisation.

### DESCRIPTION D'UN OU PLUSIEURS EXEMPLES DE MODE DE REALISATION

On a représenté sur les figures 1.a et 1.b, un premier mode de réalisation d'un carter d'échappement 2 sur lequel sont fixés des tubes de sortie 30 d'une vanne de régime transitoire (ou Transient Bleed Valve, TBV selon la terminologie anglo-saxonne) d'une turbomachine d'un aéronef.

Le carter d'échappement 2 comprend une virole 4 et un moyeu 5 qui sont reliés par une pluralité de bras 6, ainsi que des bouches 3 qui sont situées sur la virole 4, dans le prolongement de plusieurs bras 6. Le moyeu 5 comprend une cavité en son centre.

Parmi cette pluralité de bras 6, le carter d'échappement 2 comprend des bras chapes 61 (trois dans le mode de réalisation représenté en figures 1.a, 1.b et 2) qui sont disposés au niveau des éléments de fixation 41 de la virole 4 à l'aéronef. Ces bras chapes 61 sont des bras 6 qui ne sont pas creux et qui assurent la tenue mécanique du carter d'échappement 2. Les bras de chape 61 ne sont connectés à aucune bouche 3. Aucune bouche 3 n'est fixée sur la virole 4 dans le prolongement des bras de chapes 61.

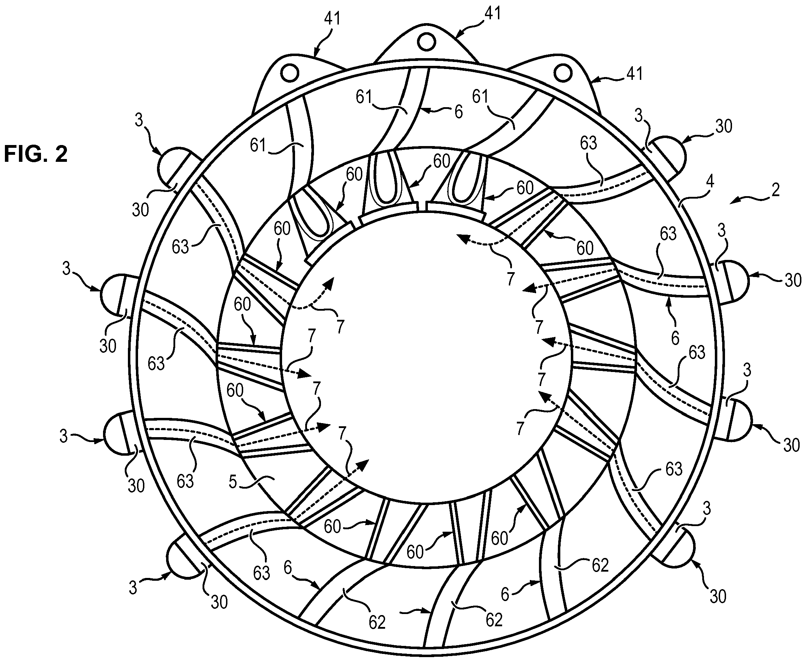

Le carter d'échappement 2 comprend également des bras de servitudes d'huile 62 dans lesquels sont installés des circuits de circulation d'huile alimentant les circuits hydrauliques pour la commande des servitudes (comme les volets, les freins, le train d'atterrissage). Dans le mode de réalisation illustré sur la figure 2, le carter d'échappement 2 comprend trois bras de servitudes d'huile 62, qui sont disposés à l'opposé des trois bras de chape 61 par rapport au moyeu 5. Les bras de servitudes d'huile 62 ne sont connectés à aucune bouche 3. Aucune bouche 3 n'est fixée sur la virole 4 dans le prolongement des bras de servitude d'huile 62.

Enfin, le carter d'échappement 2 comprend également des bras creux 63 qui comprennent chacun une cavité qui est débouchante à ses deux extrémités, donc au niveau de la virole 4 et du moyeu 5. Dans le premier mode de réalisation, tous les bras creux 63 sont connectés à une bouche 3. Plus précisément, une bouche 3 est rapportée sur la virole 4 (par exemple par soudage) dans le prolongement de chaque bras creux 63, de sorte que lorsque un tube de sortie 30 est fixé sur la bouche 3, le flux d'air 7 sortant dudit tube de sortie 30 pénètre directement dans la cavité du tube creux 63. La bouche 3 est une pièce rapportée qui est fixée sur la virole 4 du carter d'échappement 2, et qui permet d'assurer la fixation du tube de sortie 30 sur la virole 4 et son étanchéité.

Comme illustré sur la figure 2, les tubes de sortie 3 de la vanne de régime transitoire sont chacun connectés à un bras creux 63 par l'intermédiaire d'une bouche 3, de manière qu'un flux d'air 7 sortant de la vanne de régime transitoire pénètre dans le bras creux 63 et circule à l'intérieur du moyeu 5, et plus précisément dans la cavité du moyeu 5.

La vanne de régime transitoire étant une vanne qui permet de décharger un compresseur haute pression de la turbomachine lors du démarrage et des accélérations, le flux d'air 7 est un flux d'air chaud qui permet de réchauffer le moyeu 5, et ainsi de limiter la différence de température entre le moyeu 5 et la virole 4 lors du décollage ou des phases accélérations de l'aéronef.

Ainsi, l'apparition des efforts en traction au niveau des bras 6 qui surviennent lors du décollage ou des phases d'accélération de l'aéronef est limitée, et la durée de vie du carter d'échappement 2 est donc augmentée.

D'une manière avantageuse, malgré le fait que les circuits de circulation d'huile présents dans les bras de servitudes d'huile 62 soient chauffés par le flux d'air 7, il n'y a pas d'augmentation du risque de cokéfaction de l'huile. En effet, le compresseur haute pression ne se déchargeant à travers la vanne d'échappement transitoire que lors du démarrage ou des phases d'accélération de l'aéronef, l'huile n'est pas chauffée pendant les périodes durant laquelle elle ne circule plus, et ainsi le risque de cokéfaction n'est pas augmenté.

Ainsi, ceci peut être facilement implémenté sur les turbomachines sans nécessiter un couteux travail d'adaptation, et n'entraine pas de problème de cokéfaction de l'huile. En effet, d'une manière générale sur les turbomachines connues, les bouches 3 sur lesquelles sont connectés les tubes de sortie 30 sont disposées sur la virole 4 du carter d'échappement 2, de sorte à éjecter le flux d'air 7 entre les bras 6 reliant la virole 4 au moyeu 5. Ainsi, seule une légère adaptation du carter d'échappement 2 est nécessaire.

Dans le premier mode de réalisation de l'invention, afin d'améliorer l'homogénéité du réchauffement du moyeu 5, et comme illustré sur la figure 2, une partie du flux d'air 7 qui sort des bras creux 63 est orientée vers une zone du moyeu 5 sur laquelle sont fixés les bras chapes 61. En effet, cette zone dudit moyeu 5 n'est pas directement chauffée par un flux d'air chaud 7 sortant des bras 6 à laquelle elle est fixée.

Les bras 6 comprennent chacun un raidisseur 60 qui est situé à l'intérieur du moyeu 5. Comme illustré sur la figure 2, le flux d'air 7 sort des bras creux 63 au niveau des raidisseurs 60.

Dans le premier mode de réalisation, le flux d'air 7 qui sort d'un bras creux 63 qui est adjacent à un bras de chape 61 est dévié vers le raidisseur 60 dudit bras de chape 61 par un déflecteur 8. Le déflecteur 8 peut être réalisé par une tôle incurvée qui est disposée au niveau du raidisseur 60 dudit bras creux 63 adjacent audit bras de chape 61.

Dans le premier mode de réalisation illustré sur la figure 2, les trois bras de chape 61 sont disposés à la suite, de sorte que seuls deux bras creux 63 sont adjacents à un bras de chape 61.

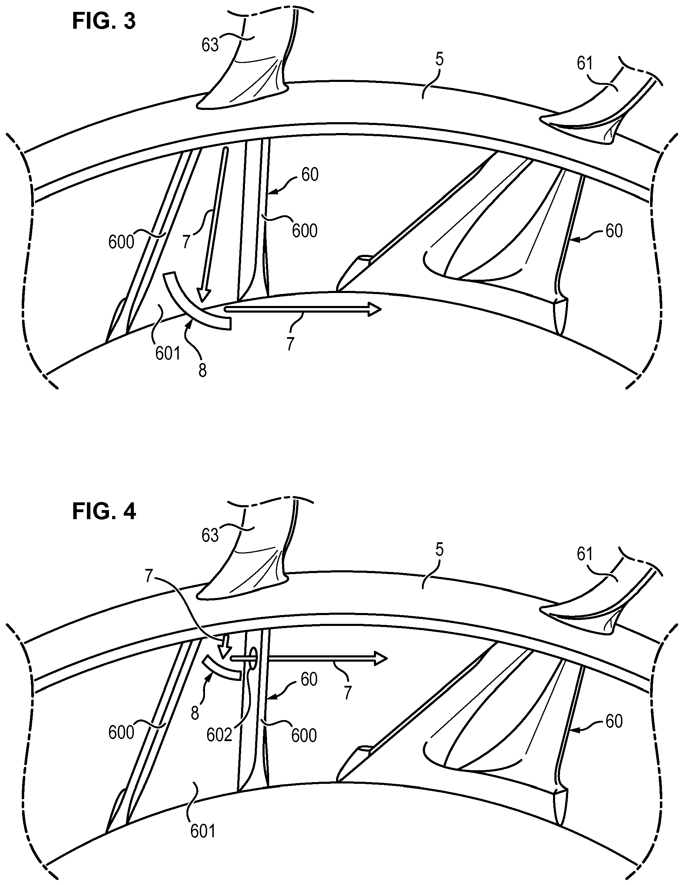

Selon une première variante du premier mode de réalisation qui est illustrée par la figure 3, le renfort 60 du bras creux 63 qui est adjacent au bras de chape 61 comprend deux parois latérales 600 qui forment un canal qui comprend un orifice frontal 601 par lequel le flux d'air 7 s'écoule en sortant du bras creux 63. L'orifice frontal 601 est situé dans le prolongement de la cavité du bras creux 63.

Dans la première variante du premier mode de réalisation, le déflecteur 8 est disposé au niveau de l'orifice frontal 601 de manière à dévier le flux d'air 7 vers le renfort 60 du bras de chape 61.

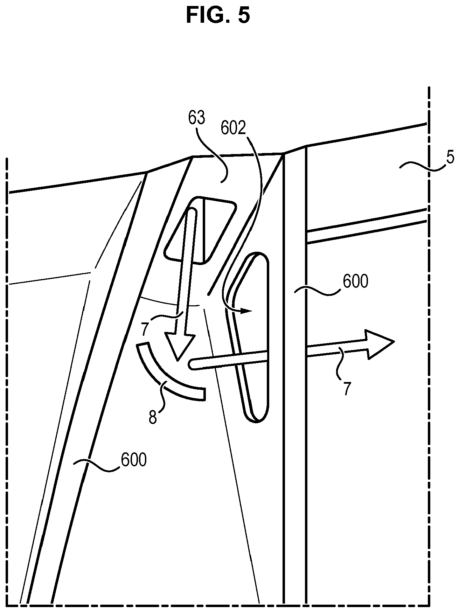

Selon une deuxième variante du premier mode de réalisation, qui est illustrée par les figures 4 et 5, les parois latérales 600 comprennent chacune un orifice latéral 602 (seul un orifice latéral 602 est représenté sur les figures 4 et 5). Ainsi, le déflecteur 8 est situé à l'intérieur du renfort 60 au niveau de l'orifice latéral 602, et dévie le flux d'air 7 vers le bras de chape 61 à travers l'orifice latéral 602.

D'une manière préférentielle, dans le premier mode de réalisation, le flux d'air 7 sortant des bras creux 63 n'est pas directement dévié vers les bras de servitudes d'huile 62, de manière à ne pas entraîner une surchauffe de l'huile.

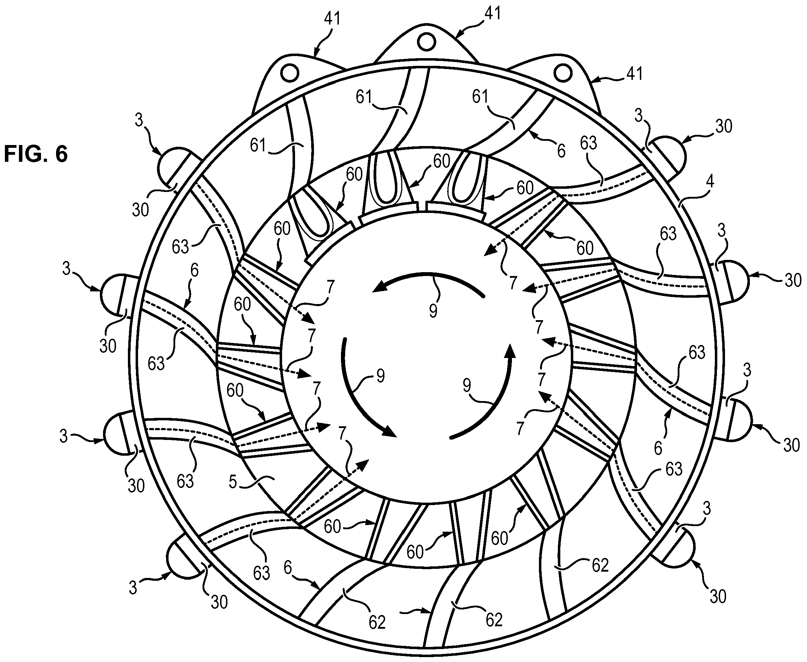

Selon un deuxième mode de réalisation illustré sur la figure 6, le flux d'air 7 n'est pas directement dévié vers les renforts 60 des bras de chape 63 par des déflecteurs 8. En effet, lorsque le carter d'échappement 2 est un carter à bras tangentiels, l'homogénéisation du réchauffement du moyeu 5 est assurée par un tourbillon 9 d'air chaud (ou swirl selon la terminologie anglo-saxonne) dans la cavité du moyeu 5. On comprend ici par carter d'échappement à bras tangentiels un carter dont les bras sont inclinés par rapport à la normale par rapport à la surface externe du moyeu.

Ainsi, les bras 6 étant inclinés par rapport à la normale par rapport à la surface externe du moyeu 5, le flux d'air 7 arrive à l'intérieur du moyeu 5 avec une inclinaison par rapport à la normale, ce qui forme le tourbillon 9 sous l'effet de la force centrifuge.

## Revendications

1. Carter d'échappement pour une turbomachine d'un aéronef comprenant une virole (4), un moyeu (5) formant une cavité, des bras creux (63) reliant ladite virole (4) audit moyeu (5), et au moins une bouche (3) située sur la virole (4) et qui est adaptée pour être connectée à un tube de sortie (30) d'une vanne de régime transitoire de la turbomachine, ladite au moins une bouche (3) est fixée sur la virole (4) dans le prolongement d'un bras creux (63), de manière qu'un flux d'air (7) sortant du tube de sortie (30) de la vanne de régime transitoire pénètre dans le bras creux (63) et circule dans la cavité du moyeu (5),**caractérisé en ce que** le carter d'échappement (2) comprend au moins un bras de chape (61), et qu'un bras creux (63) adjacent audit bras de chape (61) comprend un déflecteur (8) de manière à dévier le flux d'air (7) sortant dudit bras creux (63) vers un raidisseur (60) du bras de chape (61).

2. Carter d'échappement (2) selon la revendication 1, **caractérisé en ce que** le bras creux (63) adjacent au bras de chape (61) comprend un raidisseur (60) qui comprend un orifice latéral (602), et que le déflecteur (8) est situé à l'intérieur dudit raidisseur (60) dudit bras creux (63), de manière à dévier au moins une partie du flux d'air (7) sortant dudit bras creux (63) vers le raidisseur (60) du bras de chape (61) à travers ledit orifice latéral (602).

3. Carter d'échappement (2) selon la revendication 1, **caractérisé en ce que** le bras creux (63) qui est adjacent au bras de chape (61) comprend un raidisseur (60) qui comprend un orifice frontal (601), et que le déflecteur (8) est situé au niveau dudit orifice frontal (601).

4. Carter d'échappement (2) selon l'une des revendications 1 à 3, **caractérisé en ce que** le déflecteur (8) est une tôle incurvée.

5. Carter d'échappement (2) selon l'une des revendications précédentes, **caractérisé en ce que** le carter d'échappement (2) est un carter d'échappement à bras tangentiels.

6. Turbomachine comprenant un carter d'échappement (2) selon l'une des revendications 1 à 5, dans laquelle ladite turbomachine comprend une vanne d'échappement transitoire comprenant un tube de sortie (30) qui est connecté à une bouche (3) dudit carter d'échappement (2).

7. Aéronef comprenant une turbomachine selon la revendication 6.

## Patentansprüche

1. Abgasgehäuse für eine Turbomaschine eines Luftfahrzeugs, umfassend einen Ring (4), eine Nabe (5), die einen Hohlraum bildet, hohle Arme (63), die den Ring (4) mit der Nabe (5) verbinden, und mindestens einen Luftschlitz (3), der sich auf dem Ring (4) befindet und der für die Verbindung mit einem Ausgangsrohr (30) eines Übergangsleistungsventils der Turbomaschine geeignet ist, wobei der mindestens eine Luftschlitz (3) auf dem Ring (4) in der Verlängerung eines hohlen Arms (63) derart befestigt ist, dass ein aus dem Ausgangsrohr (30) des Übergangsleistungsventils austretender Luftstrom (7) in den hohlen Arm (63) eindringt und in dem Hohlraum der Nabe (5) zirkuliert, **dadurch gekennzeichnet, dass** das Abgasgehäuse (2) mindestens einen Gabelarm (61) umfasst und dass ein zu dem Gabelarm (61) benachbarter hohler Arm (63) einen Abweiser (8) umfasst, so dass der aus dem hohlen Arm (63) austretende Luftstrom (7) zu einer Versteifung (60) des Gabelarms (61) umgelenkt wird.

2. Abgasgehäuse (2) nach Anspruch 1, **dadurch gekennzeichnet, dass** der zum Gabelarm (61) benachbarte hohle Arm (63) eine Versteifung (60) umfasst, die eine seitliche Öffnung (602) umfasst, und dass sich der Abweiser (8) im Inneren der Versteifung (60) des hohlen Arms (63) befindet, so dass mindestens ein Teil des aus dem hohlen Arm (63) austretenden Luftstroms (7) zu der Versteifung (60) des Gabelarms (61) durch die seitliche Öffnung (602) umgelenkt wird.

3. Abgasgehäuse (2) nach Anspruch 1, **dadurch gekennzeichnet, dass** der zum Gabelarm (61) benachbarte hohle Arm (63) eine Versteifung (60) umfasst, die eine frontale Öffnung (601) umfasst, und dass sich der Abweiser (8) im Bereich der frontalen Öffnung (601) befindet.

4. Abgasgehäuse (2) nach einem der Ansprüche 1 bis 3, **dadurch gekennzeichnet, dass** der Abweiser (8) ein gekrümmtes Blech ist.

5. Abgasgehäuse (2) nach einem der vorangehenden Ansprüche, **dadurch gekennzeichnet, dass** das Abgasgehäuse (2) ein Abgasgehäuse mit tangentialen Armen ist.

6. Turbomaschine, umfassend ein Abgasgehäuse (2) nach einem der Ansprüche 1 bis 5, wobei die Turbomaschine ein Übergangsauslassventil umfasst, umfassend ein Ausgangsrohr (30), das mit einem Luftschlitz (3) des Abgasgehäuses (2) verbunden ist.

7. Luftfahrzeug, umfassend eine Turbomaschine nach Anspruch 6.

## Claims

1. An exhaust casing for an aircraft turbine engine comprising a shroud (4), a hub (5) forming a cavity, hollow arms (63) connecting said shroud (4) to said hub (5), and at least one mouth (3) situated on the shroud (4) and which is suitable to be connected to an outlet tube (30) of a transient-operation valve of the turbine engine, said at least one mouth (3) is attached to the shroud (4) in the extension of a hollow arm (63), so that an air flow (7) exiting the outlet tube (30) of the transient-operation valve penetrates into the hollow arm (63) and circulates in the cavity of the hub (5), **characterized in that** the exhaust casing (2) comprises at least one yoke arm (61), and that a hollow arm (63) adjoining said yoke arm (61) comprises a deflector (8) so as to deflect the air flow (7) exiting said hollow arm (63) toward a stiffener (60) of the yoke arm (61).

2. The exhaust casing (2) according to claim 1, **characterized in that** the hollow arm (63) adjoining the yoke arm (61) comprises a stiffener (60) which comprises a side orifice (602), and that the deflector (8) is situated inside said stiffener (60) of said hollow arm (63) so as to deflect at least a portion of the air flow (7) exiting said hollow arm (63) toward the stiffener (60) of the yoke arm (61) through said side orifice (602).

3. The exhaust casing (2) according to claim 1, **characterized in that** the hollow arm (63) which adjoins the yoke arm (61) comprises a stiffener (60) which comprises a front orifice (601) and that the deflector (8) is situated at said front orifice (601).

4. The exhaust casing (2) according to one of claims 1 to 3, **characterized in that** the deflector (8) is a curved sheet-metal part.

5. The exhaust casing (2) according to one of the preceding claims, **characterized in that** the exhaust casing (2) is an exhaust casing with tangential arms.

6. A turbine engine comprising an exhaust casing (2) according to one of claims 1 to 5, wherein said turbine engine comprises a transient bleed valve comprising an outlet tube (30) which is connected to a mouth (3) of said exhaust casing (2).

7. An aircraft comprising a turbine engine according to claim 6.
